# EUROPEAN PATENT APPLICATION

(11) **EP 4 821 649 A1**
(43) Date of publication of application: **14.10.2026**
(21) Application number: 25191302.6
(22) Date of filing: 23.07.2025
(51) Int. Cl.: B28D 1/18, B28D 1/22, C03B 33/09

(54) **METHOD FOR HEAT CHAMFERING GLASS PANEL AND GLASS PANEL**

(30) Priority: 08.04.2025 KR 20250045065
(71) Applicant: Hana Technology Co., Ltd., Gyeonggi-do 17118 (KR)
(72) Inventor: LEE, Chang Seok, Yongin-si, Gyeonggi-do 17118 (KR); CHOI, Kyoung Ho, Yongin-si, Gyeonggi-do 17118 (KR)
(74) Representative: Stöckeler, Ferdinand

(57) **Abstract**

Disclosed relates to a method for heat chamfering a glass panel and a glass panel produced thereby and, more particularly, to a method for heat chamfering a glass panel and a glass panel produced thereby, wherein the method is capable of inhibiting the production of a stepped part at an edge area of a glass plane as much as possible after performing a heat chamfering process by forming a cutting line at a portion of the glass panel before a heat chamfering device performs the heat chamfering process on the edge area of the glass panel.

## Description

### CROSS REFERENCE TO RELATED APPLICATION

The present application claims priority to Korean Patent Application No. 10-2025-0045065, filed April 08, 2025, the entire contents of which is incorporated herein for all purposes by this reference.

### BACKGROUND OF THE INVENTION

### Field of the Invention

The present disclosure relates to a method for heat chamfering a glass panel and a glass panel produced thereby and, more particularly, to a method for heat chamfering a glass panel and a glass panel produced thereby, the method and the glass panel being capable of inhibiting the production of a stepped part at an edge area of a glass plane as much as possible after performing a heat chamfering process by forming a cutting line at a portion of the glass panel before a heat chamfering device performs the heat chamfering process on the edge area of the glass panel.

### Description of the Related Art

Recently, mobile products such as smartphones and tablet PCs have been introduced with diverse designs and features to meet the needs of consumers. Liquid crystal displays, LED panels, OLED panels, touch panels, etc. are mainly used as displays for these mobile products, and screen protective glass (hereinafter referred to as "glass panel") is used to protect a surface of the display. The glass panels are cut using lasers, scribers, water jets, etc., depending on the size of a display to be applied, and undergo surface treatment and reinforcement processes. The above-mentioned surface treatment and reinforcement processes of the glass panel are essentially accompanied by a polishing process on a cut surface to prevent the glass panel from breaking, i.e., to increase the roughness of the glass panel. As an example of the polishing process, there are technologies related to a heat chamfering process in which a heating member heated by a high-frequency induction heater comes into contact with a glass substrate and edges of the glass substrate are chamfered.

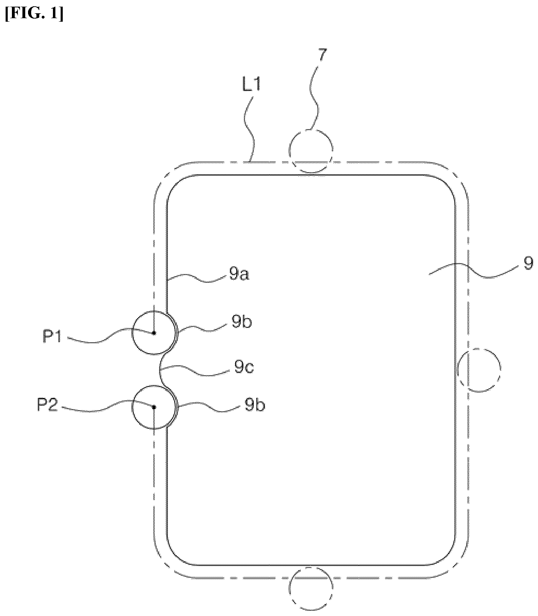

FIG. 1 is a reference view illustrating a glass panel formed by a conventional heat chamfering process of a glass panel.

Referring to FIG. 1, the heat chamfering process is performed such that a rod type heating member 7 is controlled to move along a side surface and a corner of a glass panel 9 so that the glass is separated itself from the glass panel 9. In detail, the heating member 7 may enter an entry position P1 where the heating member 7 comes into first contact with the glass panel 9, move along a processing path L1, and then may be separated from the glass panel 9 at a separation position P2. In this point, the entry position P1 and the separation position P2 are set at spaced positions along the processing path L1.

During the heat chamfering process, heat conducted to the rod type heating member 7 by the high-frequency induction heater may be conducted in a radial direction from the heating member 7. Accordingly, a pair of inwardly recessed parts 9b may be formed on portions of a side surface 9a of the glass panel 9 corresponding to the entry position P1 of the heating member 7 and the separation position P2, and a stepped part 9c protruding outwardly may be formed between the pair of recessed parts 9b.

Therefore, the heat chamfering process may cause the side surface 9a of the processed glass panel 9 to become uneven, thereby causing deterioration in the quality of the glass panel 9.

To solve the above-mentioned problem, the present disclosure provides a new method for heat chamfering a glass panel and a glass panel produced thereby, which will be described in more detail hereinafter.

### Documents of Related Art

Korean Patent No. 10-1620375 "Manufacturing method of ultra-thin type glass plate including laminating and cutting process"

### SUMMARY OF THE INVENTION

Accordingly, the present disclosure has been made keeping in mind the above problems occurring in the related art, and an objective of the present disclosure is to provide a method for heat chamfering a glass panel and a glass panel produced thereby, the method being configured to form a cutting line at one portion of the glass panel before a heat chamfering process is performed on an edge area of the glass panel, thereby inhibiting as much as possible the edge area of the glass panel from having a stepped part after performing the heat chamfering process.

Another objective of the present disclosure is to provide a method for heat chamfering a glass panel and a glass panel produced thereby, the method being configured to form a cutting line at a portion close to a side surface of the glass panel where an entry position and a separation position of a processing member are set, thereby inhibiting an edge area of the glass panel between the entry position and the separation position from having a stepped part.

Yet another objective of the present disclosure is to provide a method for heat chamfering a glass panel and a glass panel produced thereby, the method being configured to have an entry position of a processing member set at a portion eccentric from a central portion of a cutting line on the basis of a processing path of the processing member, thereby inhibiting a portion of an edge area of the glass panel close to the separation position of the processing member from having a recessed part.

Further another objective of the present disclosure is to provide a method for heat chamfering a glass panel and a glass panel produced thereby, the method being configured to form a cutting line in which a portion extends diagonally, thereby inhibiting a recessed part from being formed in a portion of the edge area of the glass panel without the cutting line.

The present disclosure may be implemented by an embodiment having the following configuration in order to achieve the above described objectives.

According to an embodiment of the present disclosure, there is provided a method for heat chamfering a glass panel, the method including: forming a cutting line on a portion of the glass panel; and heat chamfering, by a heat chamfering device, an edge area of the glass panel in which the cutting line is formed, wherein the heat chamfering device may include: a processing member moving along a processing path and heat chamfering the edge area of the glass panel; and a heat-generating part allowing the processing member to be heated.

According to another embodiment of the present disclosure, in the method for heat chamfering a glass panel according to the present disclosure, the cutting line may have at least one portion thereof that overlaps with an imaginary line that may be a boundary between an area removed from the glass panel when performing the heat chamfering of the edge area, and a remaining area.

According to another embodiment of the present disclosure, in the method for heat chamfering a glass panel according to the present disclosure, the cutting line may be a laser cutting line.

According to another embodiment of the present disclosure, in the method for heat chamfering a glass panel according to the present disclosure, the processing member may be configured to enter the glass panel at an entry position and to be separated from the glass panel at a separation position, and the cutting line may overlap with the entry position and the separation position in a direction orthogonal to the processing path of the processing member on a horizontal plane.

According to another embodiment of the present disclosure, in the method for heat chamfering a glass panel according to the present disclosure, the entry position may be spaced apart from the separation position on the basis of the processing path.

According to another embodiment of the present disclosure, in the method for heat chamfering a glass panel according to the present disclosure, the entry position may be set at a position that is eccentric in a first direction from a central portion of the cutting line on the basis of the processing path of the processing member.

According to another embodiment of the present disclosure, in the method for heat chamfering a glass panel according to the present disclosure, the separation position may be set at the central portion of the cutting line or at a position that may be eccentric in a second direction from the central portion on the basis of the processing path of the processing member.

According to another embodiment of the present disclosure, in the method for heat chamfering a glass panel according to the present disclosure, the processing member may enter the glass panel in an access path, and the access path may be provided at an acute angle to the processing path.

According to another embodiment of the present disclosure, in the method for heat chamfering a glass panel according to the present disclosure, the processing member may be separated from the glass panel in a separation path, and the separation path may be provided at an obtuse angle to the processing path.

According to another embodiment of the present disclosure, in the method for heat chamfering a glass panel according to the present disclosure, the cutting line may be a straight line parallel to the processing path of the processing member.

According to another embodiment of the present disclosure, in the method for heat chamfering a glass panel according to the present disclosure, the cutting line may include: a first line located at an adjacent portion to the entry position and extending parallel to the processing path of the processing member; and a second line located at an adjacent portion to the separation position and extending in a diagonal direction.

According to another embodiment of the present disclosure, in the method for heat chamfering a glass panel according to the present disclosure, the cutting line may extend in a diagonal direction so as to be adjacent to an adjacent portion of the edge area of the glass panel, when extending from a portion adjacent to the separation position to a portion adjacent to the entry position.

According to another embodiment of the present disclosure, in the method for heat chamfering a glass panel according to the present disclosure, the cutting line may be spaced apart from the edge area of the glass panel, and a spacing distance between the cutting line and the edge area may have a value within a range equal to or greater than 1 times of the thickness of the glass panel and equal to or less than 4 times of the thickness of the glass panel.

According to another embodiment of the present disclosure, in the method for heat chamfering a glass panel according to the present disclosure, at the separation position, a separation speed of the processing member may be faster than a moving speed of the processing member when the heat chamfering of the glass panel is performed.

According to another embodiment of the present disclosure, the method for heat chamfering a glass panel according to the present disclosure may include cutting a mother glass to obtain a cell-unit glass panel.

According to an embodiment of the present disclosure, there is provided a glass panel that may include: a surface processed area heat-chamfered; and a surface unprocessed area laser-cut.

According to another embodiment of the present disclosure, in the glass panel according the present disclosure, the surface unprocessed area may have a surface extending in a vertical direction.

According to another embodiment of the present disclosure, the glass panel according the present disclosure may include reinforcing chemically the glass panel before the heat chamfering of the glass panel is performed, wherein the surface processed area may have a rounded surface.

According to another embodiment of the present disclosure, in the glass panel according the present disclosure, the surface processed area may have a surface extending in a vertical direction.

The present disclosure has the following effects with the above-described configuration.

According to the present disclosure, a cutting line is formed at one portion of the glass panel before a heat chamfering process is performed on an edge area of the glass panel, thereby inhibiting as much as possible the edge area of the glass panel from having a stepped part after performing the heat chamfering process.

According to the present disclosure, a cutting line is formed at a portion close to a side surface of the glass panel where an entry position and a separation position of a processing member are set, thereby inhibiting an edge area of the glass panel between the entry position and the separation position from having a stepped part.

According to the present disclosure, an entry position of a processing member is set at a portion eccentric from a central portion of a cutting line on the basis of a processing path of the processing member, thereby inhibiting a portion of an edge area of the glass panel close to the separation position of the processing member from having a recessed part.

According to the present disclosure, a cutting line has a portion extending diagonally, thereby inhibiting a recessed part from being formed in a portion of the edge area of the glass panel without the cutting line.

Meanwhile, it should be added that even if the effects are not explicitly mentioned herein, the effects described in the following specification expected by the technical features of the present disclosure and their potential effects can be treated as if they were described in the specifications of the present disclosure.

### BRIEF DESCRIPTION OF THE DRAWINGS

FIG. 1 is a reference view illustrating a glass panel formed by a conventional heat chamfering process of a glass panel;
FIG. 2 is a perspective view illustrating a glass panel according to an embodiment of the present disclosure;
FIG. 3 is a reference view illustrating a heat chamfering device according to the embodiment of the present disclosure;
FIG. 4 is a schematic view illustrating performing a heat chamfering process for a glass panel by using the heat chamfering device of FIG. 3;
FIG. 5 is a flowchart illustrating a method for heat chamfering a glass panel according to the embodiment of the present disclosure;
FIG. 6 is a reference view illustrating cutting stages according to FIG. 5;
FIG. 7 is a plan view illustrating a glass panel with a cutting line formed by a stage of forming a cutting line according to the embodiment of the present disclosure;
FIG. 8 is a plan view showing a glass panel with a cutting line formed by a stage of forming a cutting line according to another embodiment of the present disclosure;
FIG. 9 is a plan view illustrating a glass panel with a cutting line formed by a stage of forming a cutting line according to another embodiment of the present disclosure;
FIGS. 10A to 10C are enlarged views illustrating a heat chamfering stage according to the embodiment of the present disclosure;
FIG. 11 is a schematic view illustrating an access angle of a processing member;
FIG. 12 is a schematic view illustrating a separation angle of the processing member;
FIG. 13 is a plan view of a glass panel formed by the method for heat chamfering a glass panel according to the embodiment of the present disclosure; and
FIG. 14 is a plan view of a glass panel formed by a method for heat chamfering a glass panel according to a comparative example.

### DETAILED DESCRIPTION OF THE INVENTION

Hereinbelow, an embodiment of the present disclosure will be described in detail with reference to accompanying drawings. The embodiments of the present disclosure may be modified in various forms, and the scope of the present disclosure should not be construed as being limited to the following embodiments, but should be construed based on the matters described in the claims. In addition, these embodiments are only provided for reference in order to more completely explain the present disclosure to those of ordinary skill in the art.

As used herein, the singular forms "a", "an", and "the" are intended to include the plural forms as well, unless the context clearly indicates otherwise. It will be further understood that the terms "comprise" and/or "comprising" when used in this specification, specify the presence of stated features, integers, steps, operations, elements, components, and/or combinations of them but do not preclude the presence or addition of one or more other features, integers, steps, operations, elements, components, and/or combinations thereof.

A glass panel 1 formed by a method for heat chamfering a glass panel according to the present disclosure is capable of being applied to a variety of technical fields, such as not only displays for mobile products, but also displays for vehicles or displays for wearable devices, and the applicable range thereof is not limited.

Furthermore, the glass panel 1 may be for example a thin glass (ultra-thin glass, UTG) of a glass thin film, but there is no limitation thereto. When the glass panel 1 is the UTG, the glass panel 1 may have a vertical thickness, for example, within a range equal to or greater than 1 *µ*m and equal to or less than 100 *µ*m, and the scope of the present disclosure is not limited to the numerical range. Furthermore, a mother glass M or the glass panel 1 to be described hereinbelow may be silicate glass including one or more types selected from a group consisting of alumina (Al2O3) silicate glass, sodium glass, potash-lime glass, and soda-lime glass. Furthermore, the mother glass M or the glass panel 1 may include, for example, alkali metal ions such as Na+, K+, or the like, for property control.

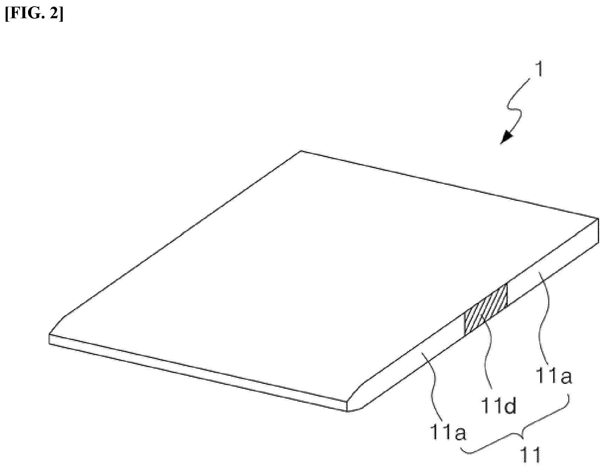

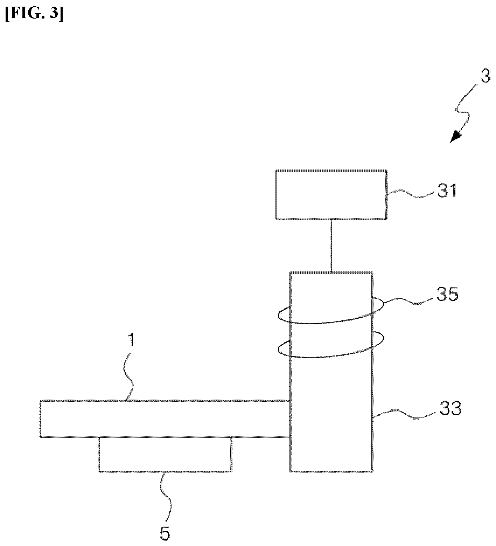

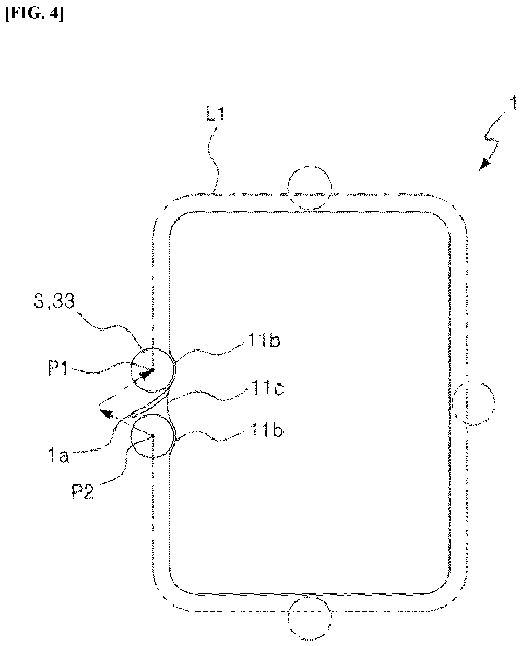

FIG. 2 is a perspective view illustrating a glass panel according to an embodiment of the present disclosure. FIG. 3 is a reference view illustrating a heat chamfering device according to the embodiment of the present disclosure. FIG. 4 is a schematic view illustrating performing a heat chamfering process for a glass panel by using the heat chamfering device of FIG. 3.

Hereinbelow, according to the embodiment of the present disclosure, a heat chamfering device utilized in the method for heat chamfering a glass panel will be described first.

Referring to FIGS. 2 to 4, the heat chamfering device 3 is configured such that at least one portion is heated to perform heat chamfering on an edge area 11 of an adjacent glass panel 1. The heat chamfering device 3 applies heat sectionally to the edge area 11 of the glass panel 1 by a heat processing manner, thereby allowing the glass to be separated itself from the glass panel 1. At this point, the heat chamfering device 3 may peel a strip 1a thinly from the glass panel 1 without creating particles to remove flaws of the edge area 11 of the glass panel 1 and increase the strength thereof. Therefore, the heat chamfering process performed by the heat chamfering device 3 may form a surface processed area 11a, which is a curing area, on the edge area 11 of the glass panel 1. The above term of "the edge area 11" is an area corresponding to the outer surface of the glass panel 1. More specifically, the edge area 11 is a side surface of the glass panel 1 and a corner where side surfaces of a pair of adjacent glass panels are in contact with each other before the heat chamfering device 3 performs a heat chamfering step S50, and the edge area 11 may be a side surface of the glass panel 1 and a corner where the strip 1a is removed by contacting with one portion of the heat chamfering device 3 after the heat chamfering S50 is performed.

Furthermore, the heat chamfering device 3 may include a body part 31, a processing member 33, and a heat-generating part 35.

The body part 31 is configured with the processing member 33 fixed to one portion thereof, preferably, a lower portion, and may have, for example, a rod shape, but there is no limitation in the shape thereof.

The processing member 33 is configured to be heated by power supply and heat chamfering an adj acent portion of the edge area 11 of the glass panel 1, and may have for example a ceramic tip, but the present disclosure is not limited thereto. The processing member 33 moves along a processing path L1 set along the edge area 11 of the glass panel 1, and may perform the heat chamfering process for the edge area 11.

To this end, the processing member 33 may be designed to be movable horizontally along the processing path L1 in order to process the edge area 11 of the glass panel 1 disposed on a jig 5. Otherwise, in some cases, the processing member 33 is fixed in a regular position thereof, and it may be configured such that the glass panel 1 moves or both the processing member 33 and the glass panel 1 move.

As an example, the processing member 33 has a rod shape and moves along the processing path L1 of the glass panel 1, and may press the edge area 11 in a normal direction. At this point, in order to maintain a constant pressure to the glass panel 1 by the processing member 33, a voice coil motor (VCM) may be used. Furthermore, when the processing member 33 pressurizes the glass panel 1, only outer surface or one point of an outer circumferential surface of the processing member 33 may come preferably into contact with the edge area 11 of the glass panel 1.

The heat-generating part 35 is configured to transfer heat to the processing member 33. The heat-generating part 35 may be disposed on an outer surface or an outer circumferential surface of the processing member 33. As an example, the heat-generating part 35 may include a high-frequency induction heater, but the scope of the present disclosure is not limited thereto.

As described above, when the heat chamfering device 3 performs the heat chamfering process of the glass panel 1, an entry position P1 where the processing member 33 is inserted to a position adjacent to the glass panel 1 and first comes into contact with the glass panel 1 and a separation position P2 where the processing member 33 is separated from the glass panel 1 after the heat chamfering process are preferably spaced apart from each other based on the processing path L1.

More specifically, the entry position P1 and the separation position P2 are set on the same lateral surface of the glass panel 1, and may be spaced apart from each other along the processing path L1 of the processing member 33. When the heat chamfering process is performed by the rod-shaped processing member 33, heat conducted to the processing member 33 may be conducted from the processing member 33 in a radial direction.

At this point, when the entry position P1 and the separation position P2 of the processing member 33 are set at the same point or set too close to each other, the processing member 33 conducts heat redundantly to the edge area 11 of the glass panel 1, and the edge area 11 of the glass panel 1 may have rounded recessed parts 11b recessed internally. When the recessed parts 11b are clearly formed, a stepped part 11c is also prominently formed between a pair of recessed parts 11b. Therefore, the entry position P1 and the separation position P2 of the processing member 33 are preferably spaced apart from each other by a predetermined distance along the processing path L1 of the processing member 33. Therefore, the processing member 33 moves along the processing path L1 after entering the entry position P1, and at the separation position P2, may be separated from the glass panel 1 before entering the entry position P1.

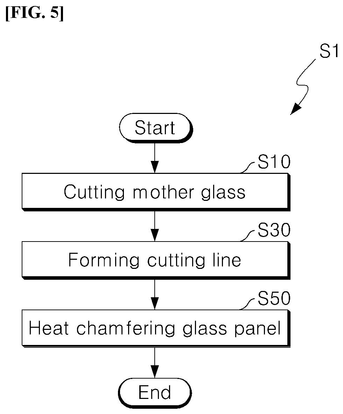

FIG. 5 is a flowchart illustrating a method for heat chamfering a glass panel according to the embodiment of the present disclosure.

Hereinbelow, the method for heat chamfering a glass panel according to the embodiment of the present disclosure will be described in detail with reference to accompanying drawings.

Referring to FIG. 5, the present disclosure relates to the method S1 for heat chamfering a glass panel. More specifically, the present disclosure relates to the method S1 for heat chamfering a glass panel, which is configured to allow the heat chamfering device 3 to form a cutting line 1b in one portion of the glass panel 1 before the heat chamfering process is performed for the edge area 11 of the glass panel 1, thereby inhibiting the production of the stepped part 11c in the edge area 11 of the glass panel 1 after the heat chamfering process is performed.

To this end, the method S1 for heat chamfering a glass panel may be performed by a cutting step S10 a glass panel, by a forming step S30 of a cutting line, and by the heat chamfering step S50 an edge area.

Before the heat chamfering step S50 of an edge area is performed and/or after the heat chamfering step S50 is performed, brittleness of the glass panel may be compensated and reinforced, or the glass panel 1 may be etched by a predetermined thickness and healed, the reinforcing of the glass panel and the healing of the glass panel are not required components of the present disclosure.

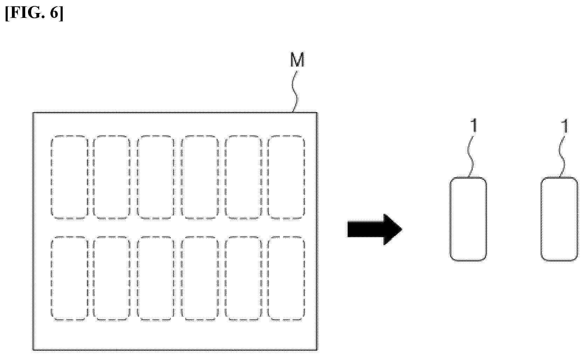

FIG. 6 is a reference view illustrating cutting stages according to FIG. 5.

Referring to FIGS. 5 and 6, the cutting step S10 of a glass panel is performed by cutting a large piece of glass or the mother glass M into one or more cell-based glass panels 1. The mother glass M may be cut by the laser cutting process, but the scope of the present disclosure is not limited thereto. The cutting step S10 of a glass panel is performed by the laser cutting for the mother glass M, and glass dust may remain on the edge area 11 of the cell-based glass panel 1. The glass dust generated may be removed from the glass panel 1 during the heat chamfering step S50 of the edge area.

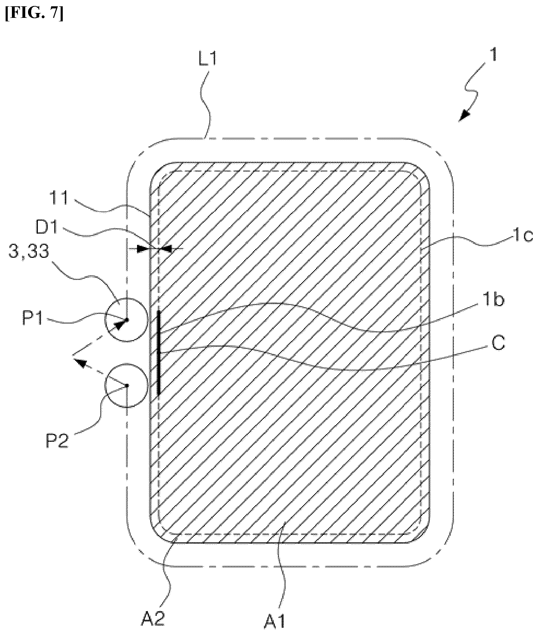

FIG. 7 is a plan view illustrating a glass panel with a cutting line formed by a forming step of a cutting line according to the embodiment of the present disclosure.

Referring to FIG. 7, the forming step S30 of a cutting line is performed by forming the cutting line 1b at one portion of the cell-based glass panel 1. The cutting line 1b is formed to be spaced apart from the edge area 11 of the glass panel 1 by a predetermined distance and may be preferably formed to be spaced apart from one side surface of the glass panel 1 by a predetermined distance. The cutting line 1b is formed by laser cutting and may extend from an upper surface of the glass panel 1 to a lower surface thereof to penetrate through the glass panel 1. In other words, the cutting line 1b may have a hole shape formed at one portion of the glass panel 1.

Furthermore, at least one portion of the cutting line 1b overlaps with an imaginary line 1c that is a boundary between an area A2 removed from the glass panel 1 by the heat chamfering step S50, and an area A1 remaining in the glass panel 1 and preferably has a portion extending along the processing path L1 of the processing member 33 by a predetermined length. The length of the cutting line 1b may be adjusted in proportion to the thickness of the glass panel 1 and/or the diameter of the processing member 33.

Furthermore, the cutting line 1b is preferably formed at a portion adjacent to a side surface of the glass panel 1 where the entry position P1 and the separation position P2 of the processing member 33 are set. At this point, the cutting line 1b may be formed at one portion overlapping with the entry position P1 and the separation position P2 in a direction that is orthogonal to the processing path L1 of the processing member 33 on the horizontal plane.

Furthermore, the entry position P1 of the processing member 33 is preferably set at a portion eccentric in a first direction (or direction of the processing path L1) from a central portion C of the cutting line 1b on the basis of the processing path of the processing member 33. Furthermore, the separation position P2 of the processing member 33 is preferably set at the central portion C of the cutting line 1b or a portion eccentric in a second direction (or direction of the processing path L1) from the central portion C on the basis of the processing path of the processing member 33. As such, the entry position P1 and the separation position P2 are set to inhibit formation of the recessed part 11b in the edge area 11 of the glass panel 1 adjacent to the separation position P2.

The cutting line 1b may include a portion extending by a predetermined distance in the processing direction of the processing member 33.

As an example, the cutting line 1b is a straight line substantially parallel to the processing path of the processing member 33 L1 and may be formed on the imaginary line 1c.

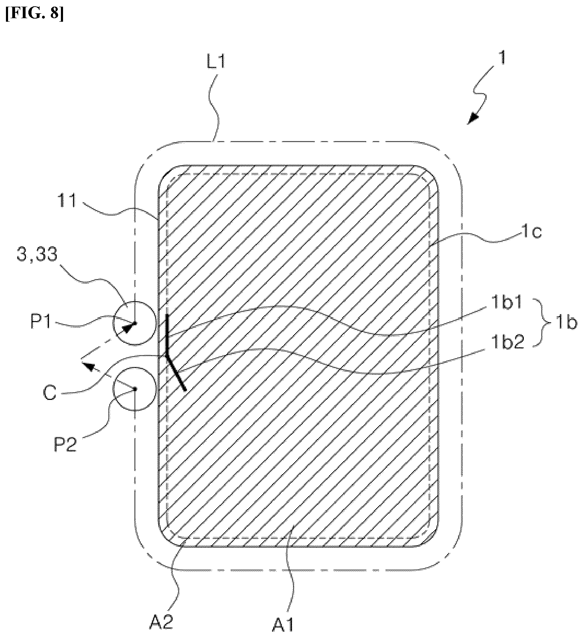

FIG. 8 is a plan view showing a glass panel with a cutting line formed by a forming step of a cutting line according to another embodiment of the present disclosure.

Referring to FIG. 8, as another example, a first portion of the cutting line 1b adj acent to the entry position P1 of the processing member 33 may be formed substantially parallel to the processing path of the processing member 33 L1 (first line 1b1), and a second portion thereof adjacent to the separation position P2 of the processing member 33 may extend diagonally not to be parallel to the processing path L1 (second line 1b2). In describing thereon in detail, the first line 1b1 may be formed on the imaginary line 1c. Furthermore, the second line 1b2 may extend in a direction adjacent to an adjacent portion of the edge area 11 of the glass panel 1 as it extends toward the first line 1b1. An end portion of the second line 1b2 may be connected to an end portion of the first line 1b1.

Even when the cutting line 1b laser-cut is formed in a portion of the glass panel 1, the stepped part 11c may be formed in the edge area 11 of the glass panel 1 between the entry position P1 and the separation position P2 of the processing member 33. This is due to a thermal conductive difference between a portion of the glass panel 1 with the cutting line 1b and an adjacent portion of the glass panel 1 without the cutting line. The stepped part 11c is a portion that protrudes outward from the glass panel 1 between a pair of adjacent recessed parts 11b.

In other words, the cutting line 1b reduces that the glass volume of the separation position P2 is smaller than the volume of an adjacent glass portion of the glass panel without the cutting line 1b, during the heat chamfering step S50, which necessarily increases the amount of heat chamfering of the edge area 11 of the glass panel without the cutting line 1b in comparison to the amount of heat chamfering of the separation position P2. At this point, the recessed part 11b is formed prominently at the portion without the cutting line 1b, and therefore the stepped part 11c is also formed prominently.

To prevent this, as the second line P12 extends toward the first line P11, the second line P12 extends toward an adj acent portion of the edge area 11 of the glass panel 1, so that the volume of glass adjacent to the separation position P2 of the processing member 33 may be set relatively large. Therefore, a difference in volumes between the portion of the glass panel with the cutting line 1b and an adjacent portion of the glass panel without the cutting line 1b is reduced, and it is possible to inhibit the recessed part 11b and the stepped part 11c from being formed in the glass panel 1.

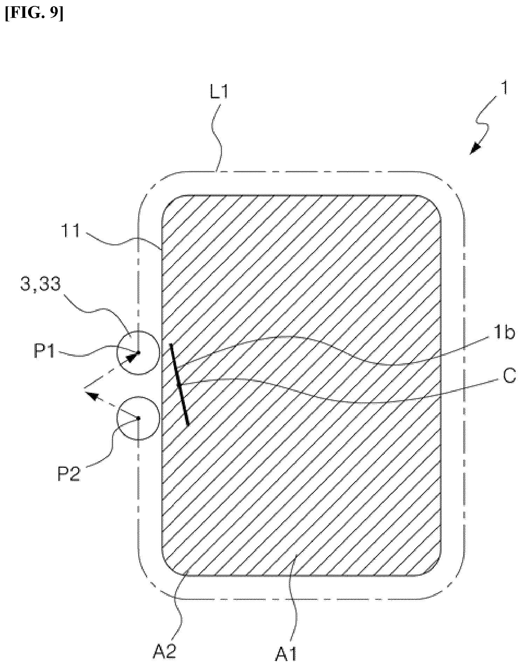

FIG. 9 is a plan view illustrating a glass panel with a cutting line formed by a forming step of a cutting line.

Referring to FIG. 9, as another example, the cutting line 1b may be provided to extend diagonally to be adjacent to the edge area 11 of the adjacent glass panel 1 when extending from a portion adj acent to the separation position P2 of the processing member 33 to a portion adj acent to the entry position P1. Effects that depend on this will be discussed in the above description.

Referring to FIG. 7, a spacing distance (or shortest distance: D1) between the cutting line 1b and the edge area 11 is preferably equal to or greater than 1 time of the thickness of the glass panel 1 and equal to or less than 4 times of the thickness of the glass panel 1. When the spacing distance D1 is less than 1 time of the thickness of the glass panel 1, during the heat chamfering step S50, glass inside the cutting line 1b may be removed, and when the spacing distance is greater than 4 times of the thickness of the glass panel 1, glass may not be removed to the cutting line 1b.

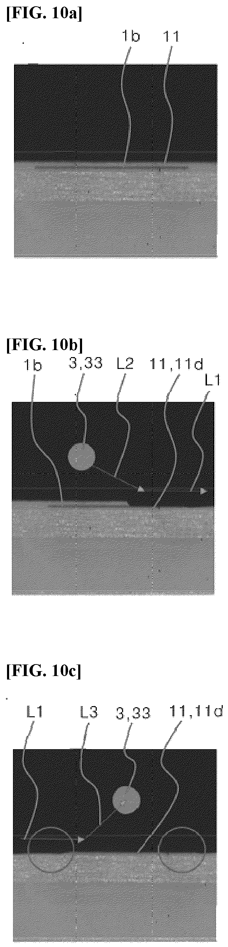

FIGS. 10A to 10C are enlarged views illustrating a heat chamfering step according to the embodiment of the present disclosure.

Referring to FIGS. 5 and 10, the heat chamfering step S50 is performed by controlling the processing member 33 along the processing path L1 while being in contact with the edge area 11 of the glass panel 1 placed on the jig 5, thereby allowing glass to be separated from the glass panel 1 itself.

Referring to FIGS. 10A and 10B, the processing member 33 may move along the access path L2 to access the entry position P1 of the glass panel 1 with the cutting line 1b. Referring to FIG. 10B, thereafter, the processing member 33 moves along the processing path L1 and may remove a part of glass between the cutting line 1b and the edge area 11 adjacent to the cutting line 1b. Referring to FIG. 10C, thereafter, the processing member 33 moves to the separation position P2. At this point, the processing member 33 moves along the processing path L1 and may remove remaining glass between the cutting line 1b and a portion of the edge area 11 adjacent to the cutting line 1b. The processing member 33 reaching the separation position P2 may separate from the glass panel 1 along a separation path L3.

During the heat chamfering step S50, glass between a portion of the cutting line 1b adjacent to the entry position P1 and the edge area 11 of the glass panel 1 may be separated from the glass panel 1 by the processing member 33 entering the entry position P1. Thereafter, the glass between a portion of the cutting line 1b adj acent to the separation position P2 and the edge area 11 of the glass panel 1 may be separated from the glass panel 1 by the processing member 33 entering the separation position P2. Therefore, during the heat chamfering step S50, a side surface of the glass panel 1 may include the surface processed area 11a that is a cured area that is processed during the heat chamfering step S50, and a surface unprocessed area 11d that is a laser cut surface formed by the cutting line 1b. At this point, the surface processed area 11a may have the strength higher than the surface unprocessed area 11d.

The surface unprocessed area 11d may have a side surface shape extending in a vertical direction in an up and down direction. Furthermore, the surface processed area 11a may have a side surface shape extending in the vertical direction in the up and down direction, or have a rounded D-cut shape. For example, before the heat chamfering step S50, when the reinforcing step is performed on the glass panel 1, the surface processed area 11a may have the rounded D-cut shape when the processing member 33 performs the heat chamfering step S50.

The reinforcing step may be a process of replacing alkali metal ions existing on a surface of the glass panel 1 with cations or alkali metal ions of larger diameter by a chemical reinforcing process to form a reinforcing layer on the surface of the glass panel 1. As an example, although Na+ ions on the surface of the glass panel 1 may be replaced with K+ ions by the chemical reinforcing process, the scope of the present disclosure is not limited thereto, and replacing of alkali metal ions remaining on the surface of the glass panel 1 with alkali metal ions of larger diameter is sufficient.

During the heat chamfering stage S50, a moving speed of the processing member 33 along the processing path L1 may have a range equal to or greater than 5mm/s and equal to or less than 10mm/s. The thickness of the glass panel 1 and the moving speed of the processing member 33 are inversely proportional. When the moving speed is less than 5mm/s, it is difficult to control the shape of the edge area 11 of the glass panel 1, and when the speed exceeds 10mm/s, sufficient heat is not transferred to the glass panel 1, and thus it may be difficult to achieve the desired shape control for the edge area 11, or heated glass may not be separated from the glass panel 1 easily.

At this point, a speed of separating the processing member 33 from the separation position P2 may have a range equal to or greater than 10mm/s and equal to or less than 20mm/s. In other words, the separating speed of the processing member 33 may be preferably set to be faster than the entering speed. When the processing member 33 is separated from the separation position P2 at a speed less than 10mm/s, the recessed part 11b at a portion with the separation position P2 may be formed prominently on the edge area 11 of the glass panel 1. In other words, heat is locally conducted to a portion of the edge area 11 of the glass panel 1 adjacent to the separation position P2 in advance when the processing member 33 enters the entry position P1. Therefore, when the separating speed of the processing member 33 is less than 10mm/s, the edge area 11 conducts heat once again and the amount of heat chamfering increased, thereby forming the recessed part 11b. Furthermore, when the separating speed of the processing member 33 exceeds 20mm/s, sufficient heat is not transferred to the glass panel 1, and thus it is difficult to achieve the desired shape control, or heated glass is not separated from the glass panel 1 easily.

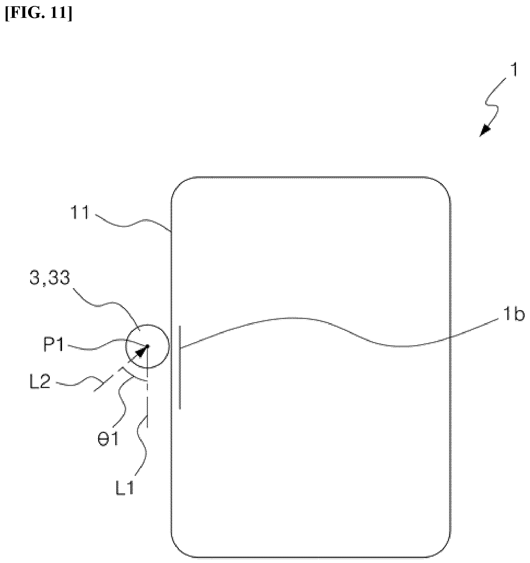

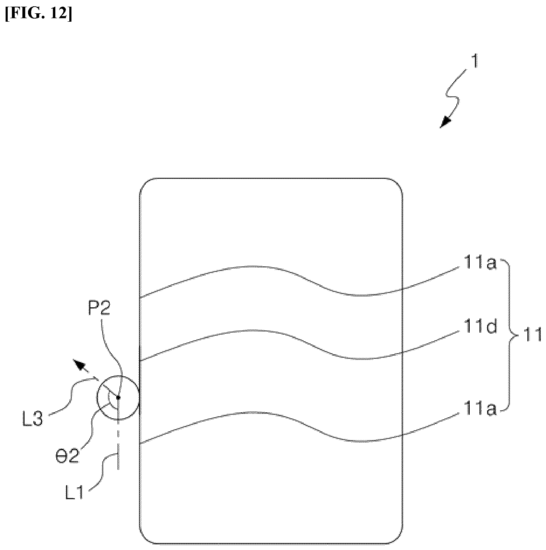

FIG. 11 is a schematic view illustrating an access angle of a processing member. FIG. 12 is a schematic view illustrating a separation angle of the processing member.

Furthermore, referring to FIG. 11, the processing member 33 may enter the entry position P1 so that the access path L2 and the processing path L1 have an entry angle θ1 therebetween. At this point, the entry angle θ1 of an acute angle is preferable and is further preferable at 50°, and the scope of the present disclosure is not limited to the numerical range. Furthermore, referring to FIG. 12, the processing member 33 may be separated from the separation position P2 so that the separation path L3 and the processing path L1 has a separation angle θ2. At this point, the separation angle θ2 of an obtuse angle is preferable and is further preferable at 130°, and the scope of the present disclosure is not limited to the numerical range.

Furthermore, during the heat chamfering step S50, the processing member 33 may be heated to a temperature within a range higher than or equal to 1000°C and equal to or less than 1500°C. When the temperature of the processing member 33 is less than 1000°C, the glass panel 1 is difficult to be melt, and when the temperature exceeds 1500°C, which may damage to the processing member 33.

Furthermore, a constant pressure of the processing member 33 controlled by the VCM may be within a range equal to or higher than 50gf and equal to or less than 80gf. The pressure controlled by the VCM is less than 50gf, the shape of the glass panel 1 is difficult to be controlled precisely, and when the pressure exceeds 80gf, damage to the glass panel 1 may be caused.

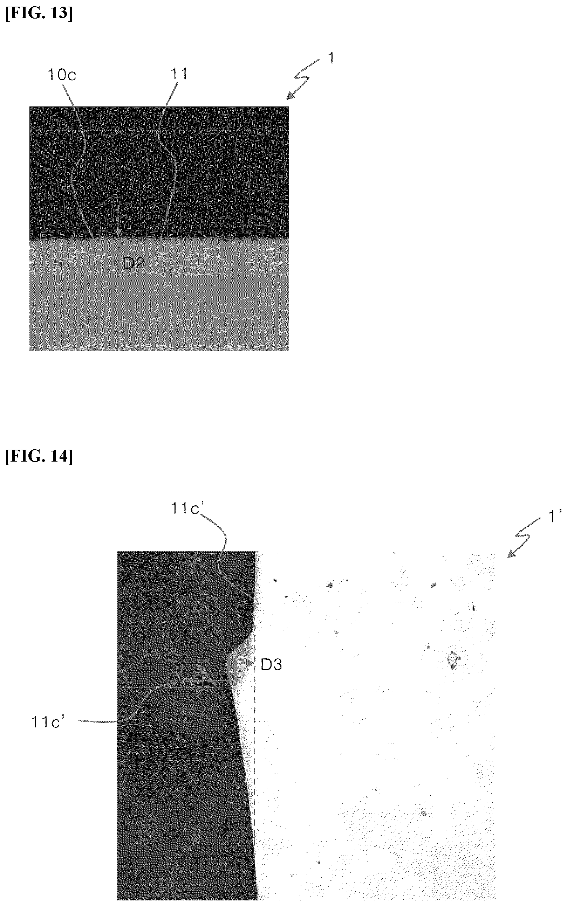

FIG. 13 is a plan view of a glass panel formed by the method for heat chamfering a glass panel according to the embodiment of the present disclosure. FIG. 14 is a plan view of a glass panel formed by a method for heat chamfering a glass panel according to a comparative example.

Hereinbelow, the glass panel (experimental example) formed by the method for heat chamfering a glass panel according to the embodiment of the present disclosure and a comparative example will be compared and described with reference to accompanying drawings. When the glass panel 1' according to the comparative example is formed, the cutting step S10 and the heat chamfering step S50 were performed, and the forming step S30 of a cutting line was not performed.

In the experimental example and the comparative example, parameters such as temperature, time, composition weight%, etc., of the cutting step and the heat chamfering step were preset to have substantially the same values. Furthermore, the glass panel 1, 1' has a thickness of 0.1T. In the experimental example, the cutting line 1b was formed to be substantially parallel to the processing path and spaced from the adjacent glass panel 1 by 0.1mm and extend along the processing path L1 by a length of 5mm. Furthermore, the cutting line 1b was formed to have a width size of 3 *µ*m along the processing path L1 of the processing member 33 and in a normal direction.

As shown in FIG. 13, in the experimental example, it is shown that the stepped part 11c has a length D2 protruding outward from the edge area 11 of the glass panel 1 by about 15 *µ*m. In other words, when the heat chamfering step S50 is performed on the glass panel 1 with the cutting line 1b, it is shown that the stepped part 11c is minimized to improve the deviation of a side surface line of the edge area 11 of the glass panel 1.

As shown in FIG. 14, in the comparative example, it is shown that the stepped part 11c' has a length D3 protruding outward from the edge area 1 1' of the glass panel 1' by about 70 *µ*m. In other words, the stepped part 11c' is formed to be relatively prominent. At this point, after performing heat chamfering on the edge area 11' of the glass panel 1', it may be assumed that the stepped part 11c' is removed by laser cutting. The size and thickness of the stepped part 11c' are small, making it difficult to remove the stepped part precisely from the glass panel 1' using laser cutting. In other words, when the stepped part 11c' is removed by laser cutting, the edge area 1 1' of the glass panel 1' or a portion therearound may be inevitably cracked or damaged, and this will happen even when the laser output power is adjusted.

The detailed description above is illustrative of the present disclosure. In addition, the above description shows and describes preferred embodiments of the present disclosure, and the present disclosure can be used in various other combinations, modifications, and environments. In other words, changes or modifications are possible within the scope of the concept of the disclosure disclosed herein, the scope equivalent to the written disclosure, and/or within the scope of skill or knowledge in the art. The above-described embodiments describe the best state for implementing the technical spirit of the present disclosure, and various changes required in the specific application field and use of the present disclosure are possible. Accordingly, the detailed description of the present disclosure is not intended to limit the present disclosure to the disclosed embodiments.

## Claims

1. A method for heat chamfering a glass panel, the method **characterized in that** it comprises:
forming a cutting line on a portion of the glass panel; and
heat chamfering, by a heat chamfering device, an edge area of the glass panel where the cutting line is formed,
wherein the heat chamfering device comprises:
a processing member moving along a processing path and heat chamfering the edge area of the glass panel; and
a heat-generating part that heats the processing member.

2. The method of claim 1, **characterized in that** the cutting line has at least one portion thereof that overlaps with an imaginary line that is a boundary between an area removed from the glass panel when performing the heat chamfering of the edge area, and a remaining area.

3. The method of claim 1, **characterized in that** the processing member is configured to enter the glass panel at an entry position and to be separated from the glass panel at a separation position, and
the cutting line overlaps with the entry position and the separation position in a direction orthogonal to the processing path of the processing member on a horizontal plane.

4. The method of claim 3, **characterized in that** the entry position is spaced apart from the separation position on the basis of the processing path.

5. The method of claim 3, **characterized in that** the separation position is set at the central portion of the cutting line or at a position that is eccentric in a second direction from a central portion on the basis of the processing path of the processing member.

6. The method of claim 1, **characterized in that** the processing member enters the glass panel in an access path, and
the access path is provided at an acute angle to the processing path.

7. The method of claim 1, **characterized in that** the processing member is separated from the glass panel in a separation path, and the separation path is provided at an obtuse angle to the processing path.

8. The method of claim 1, **characterized in that** the cutting line is a straight line parallel to the processing path of the processing member.

9. The method of claim 3, **characterized in that** the cutting line comprises:
a first line located at an adjacent portion to the entry position and extending parallel to the processing path of the processing member; and
a second line located at an adjacent portion to the separation position and extending in a diagonal direction.

10. The method of claim 1, **characterized in that** the cutting line is spaced apart from the edge area of the glass panel, and
a spacing distance between the cutting line and the edge area has a value within a range equal to or greater than 1 times of the thickness of the glass panel and equal to or less than 4 times of the thickness of the glass panel.

11. The method of claim 3, **characterized in that**, at the separation position, a separation speed of the processing member is faster than a moving speed of the processing member when the heat chamfering of the glass panel is performed.

12. A glass panel formed by the method for heat chamfering a glass panel of claim 1, the glass panel **characterized in that** a side surface of the glass panel comprises:
a surface processed area heat-chamfered; and
a surface unprocessed area laser-cut.

13. The glass panel of claim 12, **characterized in that** the surface unprocessed area has a surface extending in a vertical direction.

14. The glass panel of claim 12, **characterized in that** it further comprises:
reinforcing chemically the glass panel before the heat chamfering of the glass panel is performed,
wherein the surface processed area has a rounded surface.

15. The glass panel of claim 12, **characterized in that** the surface processed area has a surface extending in a vertical direction.
